Europäisches Patentamt

**European Patent Office**

Office européen des brevets

(11) Veröffentlichungsnummer : **0 017 616**
**B1**

(12) **EUROPÄISCHE PATENTSCHRIFT**

(45) Veröffentlichungstag der Patentschrift :
**16.02.83**

(51) Int. Cl.³ : **H 02 G 1/08**

(21) Anmeldenummer : **80810089.5**

(22) Anmeldetag : **17.03.80**

(54) **Verfahren und Vorrichtung für die Verlegung und Befestigung schwerer elektrischer Kabel.**

(30) Priorität : **27.03.79 CH 2821/79**

(43) Veröffentlichungstag der Anmeldung :
**15.10.80 Patentblatt 80/21**

(45) Bekanntmachung des Hinweises auf die Patenterteilung : **16.02.83 Patentblatt 83/07**

(84) Benannte Vertragsstaaten :
**AT DE FR GB IT NL SE**

(56) Entgegenhaltungen :
**AT B 342 697**
**CH A 460 896**
**DE A 2 330 844**
**DE C 617 656**
**DE C 617 657**
**DE C 822 264**
**NL C 102 357**

(73) Patentinhaber : **Mathias Streiff AG**
**Tschachen**
**CH-8762 Schwanden (CH)**

(72) Erfinder : **Streiff, Mathias**
**Weinberg**
**CH-8762 Schwanden (CH)**
Erfinder : **Schnyder, Peter**
**Ennetbach 3**
**CH-8754 Netstal (CH)**

(74) Vertreter : **Hepp, Dieter et al**
**HEPP & Partner AG Marktgasse 18**
**CH-9500 Wil (CH)**

Jouve, 18, rue St-Denis, 75001 Paris, France

## Verfahren und Vorrichtung für die Verlegung und Befestigung schwerer elektrischer Kabel

Die Erfindung betrifft ein Verfahren für die Verlegung und Befestigung schwerer elektrischer Kabel in einem Kabelkanal, wobei am Kabel in regelmässigen Abständen Kabelhalter befestigt sind, welche zusammen mit dem Kabel mit wenigstens einem Spannseil in den Kabelkanal eingezogen und nach dem Einziehen mit Hilfe des Spannseils fixiert werden. Die Erfindung betrifft ausserdem eine Vorrichtung für die Verlegung und Befestigung schwerer elektrischer Kabel in einem Kabelkanal mit mehreren Kraftschlüssig am Kabel befestigten Kabelhaltern, welche mit wenigstens einem Spannseil zum Einziehen und Befestigen des Kabels verbunden sind.

Derartige Verfahren bzw. Vorrichtungen dienen dazu, das Kabel beim Einziehen mechanisch zu entlasten bzw. eine sichere Befestigung im Kabelkanal zu gewährleisten. Durch die CH-A-460 896 ist bereits ein ähnliches Verfahren und eine Vorrichtung bekannt geworden, bei dem die Kabeladern eines Druckrohrkabels mittels Schellen an einem oder mehreren im Druckrohr verlaufenden Tragseilen befestigt werden. Durch die DE-C-822 264 ist eine Kabelschelle bekannt geworden, welche auf der Aussenseite mit in Pfannen gelagerten Kugeln versehen ist und welche auf einem elektrischen Kabel befestigt werden kann. Ein allenfalls vorgesehenes Zugseil wird dabei zusammen mit dem Kabel in die Schelle eingeklemmt.

Den bekannten Verlegungsarten haftet der Nachteil an, dass die Kabel selbst entweder gestreckt zwischen den einzelnen Kabelhaltern liegen oder aber zu nahe am Wandbereich des Kabelkanals angeordnet sind. Bei Kabelkanälen mit starken Krümmungen können die bekannten Vorrichtungen überhaupt nicht eingesetzt werden, da die Kabel in den Krümmungsbereichen den Kabelkanal berühren. Beim Auftreten grosser Kurzschlusskräfte führen derartige Kabel bekanntlich heftige Bewegungen aus, so dass jede Berührung mit dem Kabelkanal zu einer Zerstörung des Kabels führt.

Ein weiterer Nachteil bekannter Kabelkanäle besteht darin, dass sie nicht zusätzlich mit einem Kühlmedium gekühlt werden können, welches durch den Kabelkanal gepumpt wird, so dass die zu übertragende Leistung bei einem gegebenen Kabelquerschnitt erhöht werden kann. Es ist zwar bereits bekannt, Hochspannungskabel in einem Druckrohr zu führen, welches mit einem unter Druck gesetzten flüssigen oder gasförmigen Isoliermedium gefüllt ist. Dieses System eignet sich jedoch nicht für Erdkabel, welche über grosse Distanzen verlegt werden müssen.

Es ist daher Aufgabe der Erfindung, ein Verfahren der eingangs genannten Art zu schaffen, mit dem die Kabel über grosse Distanzen derart in einem Kabelkanal verlegt werden können, dass das Kabel auch bei starken Krümmungen des Kabelkanals mühelos eingezogen werden kann, ohne dabei beschädigt zu werden, und dass das Kabel anschliessend derart im Kabelkanal fixiert werden kann, dass es beim Auftreten von Kurzschlusskräften nicht beschädigt werden kann. Das Kabel soll ausserdem optimal gekühlt werden können und muss in der Lage sein, die infolge von Temperaturänderungen auftretenden Längenänderungen aufzufangen, ohne dass dabei hohe axiale Zug- bzw. Druckkräfte auf das Kabel einwirken und es beschädigen. Diese Aufgabe wird erfindungsgemäss dadurch gelöst, dass das Kabel vor dem Einziehen in den Kabelkanal im Bereich zwischen zwei aufeinanderfolgenden Kabelhaltern derart verformt wird, dass das Kabel bei gespanntem Spannseil zwischen den Kabelhaltern einen kurvenförmigen Durchhang aufweist.

Auf diese Weise kann dem Kabel eine sinusförmige Konfiguration gegeben werden, was das Einziehen des Kabels beträchtlich erleichtert. Das Kabel hängt bei gespanntem Spannseil lose zwischen zwei Kabelhaltern, so dass es einerseits temperaturbedingte Längenausdehnungen aufnehmen kann und andererseits beim Auftreten von Kurzschlusskräften eine bestimmte Bewegung ausführen kann. Besonders einfach kann das Verfahren durchgeführt werden, wenn das Kabel mit einer Presse verformt wird, deren Presstempel das Kabel auf einen Pressbock mit kurvenförmiger Oberfläche drückt und verformt. Diese Presse ermöglicht eine Verformung unmittelbar vor dem Einziehen in den Kabelkanal, so dass ein taktweises Arbeiten möglich ist. Das Kabel kann direkt von einer Vorratstrommel abgerollt und verformt werden, bevor die Kabelhalter montiert und das Kabel eingezogen wird.

Besonders vorteilhaft lässt sich ein erfindungsgemäss verformtes Kabel einziehen bzw. im Kabelkanal befestigen, wenn die Kabelhalter eine Vorrichtung zum Befestigen des Kabels aufweisen, die mit wenigstens zwei radial angeordneten Stegen verbunden ist, welche sie etwa im Zentrum des Kabelkanals halten, und wenn das oder die Spannseile an den Stegen befestigt ist oder sind. Auf diese Weise wird das Kabel in regelmässigen Abständen im Zentrum des Kabelkanals gehalten, so dass es radial genügend Bewegungsfreiheit hat. Es wird auch auf optimal einfache Weise erreicht, dass während des Einziehens des Kabels und auch in der Endlage weder das Kabel noch die Innenwände des Kabelkanals beschädigt werden, da sowohl das Kabel als auch das Spannseil im Abstand von der Innenwand des Kabelkanals gehalten werden. Ausserdem hat der Kabelhalter eine besonders vorteilhafte Konfiguration, welche ermöglicht, dass das bereits verlegte und befestigte Kabel mittels eines im Kabelkanal fliessenden Kühlmediums gekühlt werden kann. Ersichtlicherweise bewirken die radialen Stege nur einen relativ geringen Strömungswiderstand im Kabelkanal.

Eine besonders stabile Fixierung der Vorrichtung zum Befestigen des Kabels ergibt sich, wenn der Kabelhalter drei etwa in einem Winkel von 120° angeordnete Stege aufweist.

Eine optimale Abstützung auch bezüglich axialen Verschiebungen ergibt sich, wenn die Stege von einem Mantel umgeben sind, dessen Aussenkonfiguration annähernd dem Querschnitt des Kabelkanals entspricht. Die Stege können sich auf diese Weise nicht verkanten, sondern die Mittelachse der Vorrichtung zum Befestigen des Kabels wird immer parallel zur Mittelachse des Kabelkanals gehalten. Die Montage des Kabelhalters kann dadurch erleichtert werden, dass der Mantel zweiteilig ist und dass die Verbindungsstelle der beiden Mantelteile bei den radialen Stegen liegt. Dadurch wird auch die Herstellung des Kabelhalters vereinfacht.

Wenn die Stege am radial äusseren Ende mit Wälzkörpern versehen sind, kann der Reibungswiderstand beim Einziehen des Kabels in bestimmten Anwendungsfällen noch reduziert werden.

Zur besseren und stabileren radialen Befestigung der Kabelhalter sowohl während des Einzugs als auch in der Endlage können zwei Spannseile vorgesehen sein, die im Abstand voneinander und im gleichen Abstand von der Längsmittelachse des Kabels an den Stegen befestigt sind. Ausserdem kann zwischen zwei aufeinanderfolgenden Kabelhaltern je eine Seilklemme zum Zusammenhalten der Spannseile vorgesehen sein. Dadurch wird erreicht, dass die Spannseile in grösserem Abstand von der Innenwand des Kabelkanals gehalten werden. Durch die Seilklemmen wird ausserdem eine kettengliedartige Wirkung erzielt, so dass das Kabel auch in Kabelkanäle mit relativ engen Krümmungsradien verlegt werden kann.

Aus fabrikationstechnischen Gründen ist es vorteilhaft, wenn der Kabelkanal und die Kabelhalter einen polygonalen, insbesondere einen kreisförmigen Querschnitt aufweisen. Auf diese Weise können als Kabelkanal handelsübliche Rohre verwendet werden, welche durch Zusammenschweissen einen Kanal bilden. Um die axiale Lage der Kabelhalter im Kabelkanal zu fixieren, kann es vorteilhaft sein, wenn der Kabelkanal mindestens eine parallel zur Längsachse verlaufende Führungsleiste und der Kabelhalter mindestens eine komplementär zur Führungsleiste verlaufende Vertiefung aufweist. Selbstverständlich kann der Kabelkanal auch mindestens eine parallel zur Längsachse verlaufende Führungsnut und der Kabelhalter mindestens einen komplementär zur Führungsnut verlaufenden Vorsprung aufweisen. Durch diese Führungsvorrichtung kann ein Verwinden des Kabels während des Einzugs verhindert werden.

Die Erfindung wird nachstehend in verschiedenen Ausführungsbeispielen anhand von Zeichnungen näher erläutert. Es zeigt:

Figur 1 eine schematische Ansicht einer Kabeltrasse während des Kabeleinzugs,

Figur 2 einen Schnitt durch einen Kabelhalter gemäss Linie II-II von Figur 1,

Figur 3 ein abgewandeltes Ausführungsbeispiel eines Kabelhalters,

Figur 4 eine schematische Darstellung einer Kabelverankerung mit zwei Zugseilen, und

Figur 5 einen Schnitt gemäss Linie X-X von Figur 4.

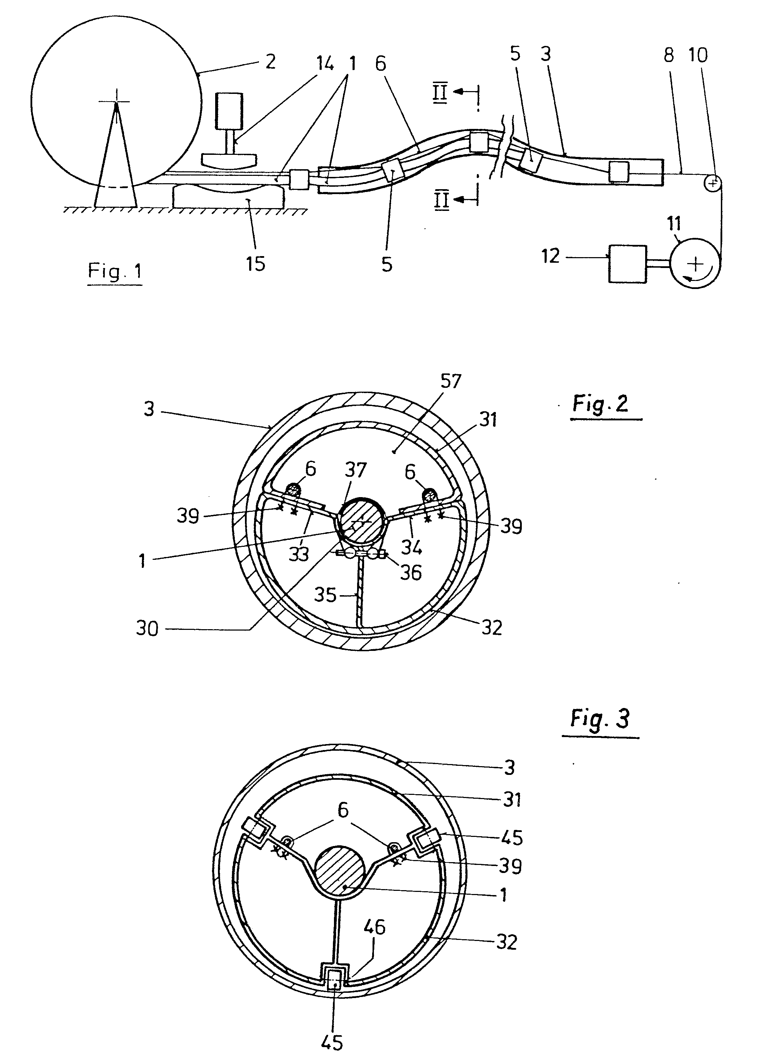

In Figur 1 ist eine Kabeltrasse in schematischer, teilweise geschnittener Ansicht dargestellt, wobei das Kabel 1 in einem Kabelkanal 3 teilweise eingezogen ist. Ersichtlicherweise sind am Kabel 1 mehrere, im Abstand voneinander angeordnete Kabelhalter 5 befestigt, um das Kabel 1 mit Abstand von den Innenwandungen des Kabelkanals 3 zu halten und dadurch ein Berühren des Kabels an diesen Innenwandungen zu verhindern. An den Kabelhaltern 5 sind zwei Spannseile 6 derart befestigt, dass beim Einziehen des Kabels 1 in den Kabelkanal 3 sämtliche axialen Zugkräfte ausschliesslich über die Spannseile 6 und nicht über das Kabel übertragen werden.

Wie aus Figur 1 entnommen werden kann, sind die Aussenabmessungen der Kabelhalter 5 etwas kleiner als die Innenabmessungen des Kabelkanals 3, so dass die Kabelhalter 5 mühelos innerhalb des Kabelkanals 3 gleiten können.

Das Kabel 1 mit den daran befestigten Kabelhaltern 5 und den Spannseilen 6 wird mittels eines Zugseils 8 in den Kabelkanal eingezogen, wobei das Zugseil 8 ebenfalls in Kabelhaltern 5 im Abstand von der Innenwand des Kabelkanals geführt wird. Nach dem Verlassen des Kabelkanals 3 wird das Zugseil über eine Stützrolle 10 zu einer Seilwinde 11 geführt, die von einem Motor 12 in Pfeilrichtung angetrieben wird.

Das einzuziehende Kabel 1 wird von einer Vorratstrommel 2 abgerollt und vor dem Eintreten in den Kabelkanal mit den Kabelhaltern versehen. Zugleich wird das Kabel 1 im Bereich zwischen zwei aufeinanderfolgenden Kabelhaltern mittels einer gegen einen Bock 15 drückenden hydraulischen Presse 14 mit einem Durchhang versehen. Durch den Durchhang am Kabel 1 werden temperaturbedingte Längenänderungen des Kabels als Änderungen des Durchhanges wirksam und wirken sich daher nicht als axiale Zug- bzw. Druckkraft auf das Kabel aus.

Figur 2 zeigt einen Querschnitt des in Figur 1 schematisch dargestellten Kabelhalters 5. Der Kabelhalter 5 besteht hier aus einer Kabelschale 30, in welcher das Kabel 1 liegt und mittels einer Bride 37 und einer Spannschraube 36 befestigt ist, sowie aus einem ersten Mantelteil 31, einem zweiten Mantelteil 32 und drei radial angeordneten, die Kabelschale und die Mantelteile miteinander verbindenden Stegen 33, 34 und 35. Zwischen den Stegen entsteht ein freier Raum, in welchem ein Kühlmedium 57 nahezu ungehindert fliessen kann.

An den oberen Stegen 33 und 34 ist je ein Spannseil 6 mittels einer U-förmigen Befestigungsklemme 39 befestigt. Die Befestigungsklemmen 39 dienen zugleich zum Verbinden der Kabelschale 30, des ersten Mantelteils 31, des zweiten Mantelteils 32 und der Stege 33 und 34. Der Steg 35 ist sowohl an der Kabelschale 30 als auch am zweiten Mantelteil 32 angeschweisst.

Aus Figur 3 ist eine weitere Ausführungsform ersichtlich, gemäss welcher eine weitere Reduktion der Reibung zwischen dem Kabelhalter 5 und dem Kabelkanal 3 erreicht wird. Hierfür sind an beiden Enden des Kabelhalters 5 je drei gleichmässig um den Umfang verteilte Rollen 45 angeordnet. Die Rollen 45 werden dabei in U-förmigen Lagerungen 46 gehalten, die an den Stegen 33, 34 und 35 befestigt sind. Wie aus Figur 3 ersichtlich ist, ragen die Rollen 45 über die Oberfläche des Kabelhalters 5 hinaus und ermöglichen daher, dass der Kabelhalter sich entlang des Kabelkanals auf den Rollen 45 bewegen kann.

Die Kabelhalter können aus Kunststoff mit niedrigem Reibungskoeffizienten (beispielsweise Polyamid) hergestellt sein. Der Kabelkanal 3 besteht beispielsweise aus Polyäthylen.

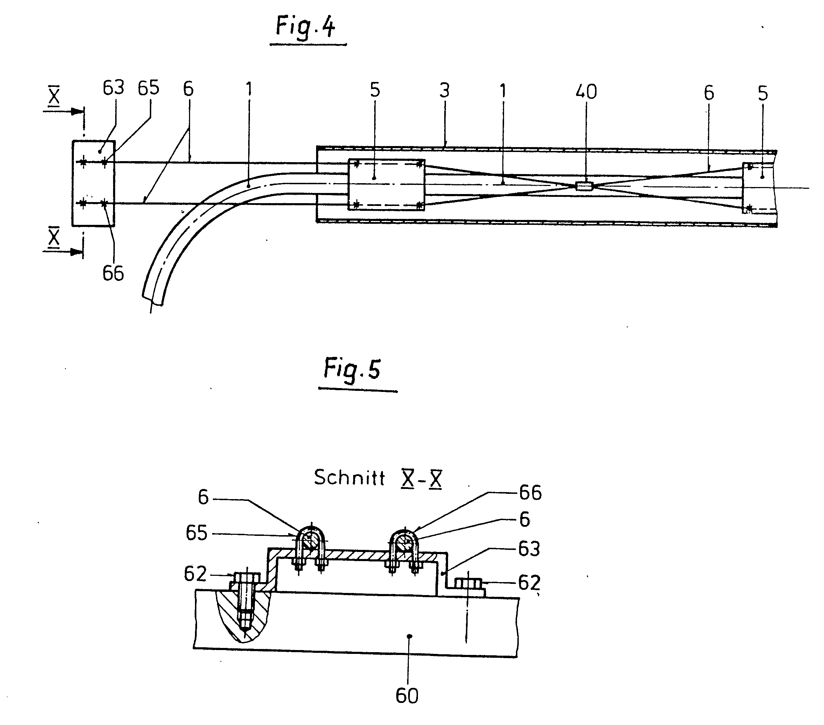

Um eine höhere Stabilität sowohl beim Einziehen des Kabels als auch in der Endlage desselben zu erreichen, sind die zwei Spannseile 6 mittels einer Seilklemme 40 im Bereich zwischen zwei aufeinanderfolgenden Kabelhaltern 5 miteinander verbunden, wie dies insbesondere aus Figur 4 ersichtlich ist.

Nach erfolgtem Einziehen des Kabels 1 wird dieses durch Verankerung der Spannseile 6 an beiden Enden des Kabelkanals 3 ortsfest in axialer und radialer Richtung befestigt. Das Kabel 1 kann dabei auch beim Auftreten hoher Kurzschlusskräfte sicher und ohne Beschädigung gehalten werden.

Figur 5 zeigt die Verankerung der Spannseile 6 im Schnitt. Die an den Enden des Kabelkanals 3 herausragenden Spannseile 6 werden über eine am Boden oder an einer Betonplatte 60 mittels Schrauben 62 befestigten Ankerplatte 63 geführt und an letzterer mit je zwei U-förmigen Seilklemmen 65 und 66 unter Zugspannung befestigt.

**Ansprüche**

1. Verfahren für die Verlegung und Befestigung schwerer elektrischer Kabel (1) in einem Kabelkanal (3), wobei am Kabel (1) in regelmässigen Abständen Kabelhalter (5) befestigt sind, welche zusammen mit dem Kabel (1) mit wenigstens einem Spannseil (6) in den Kabelkanal (3) eingezogen und nach dem Einziehen mit Hilfe des Spannseils (6) fixiert werden, dadurch gekennzeichnet, dass das Kabel (1) vor dem Einziehen in den Kabelkanal (3) im Bereich zwischen zwei aufeinanderfolgenden Kabelhaltern (5) derart verformt wird, dass das Kabel (1) bei gespanntem Spannseil (6) zwischen den Kabelhaltern (5) einen kurvenförmigen Durchhang aufweist.

2. Verfahren nach Anspruch 1, dadurch gekennzeichnet, dass das Kabel (1) mit einer Presse (14) verformt wird, deren Pressstempel das Kabel (1) auf einen Pressbock (15) mit kurvenförmiger Oberfläche drückt und verformt.

3. Vorrichtung für die Verlegung und Befestigung schwerer elektrischer Kabel (1) in einem Kabelkanal (3) zur Durchführung des Verfahrens nach Anspruch 1 mit mehreren kraftschlüssig am Kabel (1) befestigten Kabelhaltern (5), welche mit wenigstens einem Spannseil (6) zum Einziehen und Befestigen des Kabels (1) verbunden sind, dadurch gekennzeichnet, dass die Kabelhalter (5) eine Vorrichtung (30, 36, 37) zum Befestigen des Kabels (1) aufweisen, die mit wenigstens zwei radial angeordneten Stegen (33, 34, 35) verbunden ist, welche sie etwa im Zentrum des Kabelkanals (3) halten, und dass das oder die Spannseile (6) an den Stegen befestigt ist oder sind.

4. Vorrichtung nach Anspruch 3, dadurch gekennzeichnet, dass der Kabelhalter (5) etwa in einem Winkel von 120° angeordnete Stege (33, 34, 35) aufweist.

5. Vorrichtung nach Anspruch 3 oder 4, dadurch gekennzeichnet, dass die Stege von einem Mantel (31, 32) umgeben sind, dessen Aussenkonfiguration annähernd dem Querschnitt des Kabelkanals (3) entspricht.

6. Vorrichtung nach Anspruch 5, dadurch gekennzeichnet, dass der Mantel (31, 32) zweiteilig ist und dass die Verbindungsstelle der beiden Mantelteile bei den radialen Stegen (33, 34) liegt.

7. Vorrichtung nach einem der Ansprüche 3 bis 6, dadurch gekennzeichnet, dass die Stege (33, 34, 35) am radial äusseren Ende mit Wälzkörpern (45) versehen sind.

8. Vorrichtung nach einem der Ansprüche 3 bis 7, dadurch gekennzeichnet, dass zwei Spannseile (6) vorgesehen sind, die im Abstand voneinander und im gleichen Abstand von der Längsmittelachse des Kabels (1) an den Stegen (33, 34) befestigt sind.

9. Vorrichtung nach Anspruch 8, dadurchgekennzeichnet, dass zwischen zwei aufeinanderfolgenden Kabelhaltern (5) je eine Seilklemme (40) zum Zusammenhalten der Spannseile (6) vorgesehen ist.

10. Vorrichtung nach einem der Ansprüche 3 bis 9, dadurch gekennzeichnet, dass der Kabelkanal (3) und die Kabelhalter (5) einen polygonalen, insbesondere einen kreiförmigen Querschnitt aufweisen.

11. Vorrichtung nach Anspruch 10, dadurch gekennzeichnet, dass der Kabelkanal (3) mindestens eine parallel zur Längsachse verlaufende Führungsleiste und der Kabelhalter (5) mindestens eine komplementär zur Führungsleiste verlaufende Vertiefung aufweist.

12. Vorrichtung nach Anspruch 10, dadurch gekennzeichnet, dass der Kabelkanal (3) mindestens eine parallel zur Längsachse verlaufende Führungsnut und der Kabelhalter (5) mindestens einen komplementär zur Führungsnut verlaufenden Vorsprung aufweist.

**Claims**

1. A process for laying and fastening heavy electrical cables (1) in a cable duct (3), wherein cable holders (5) are fastened to the cable (1) at regular spacings, the cable holders (5) together with the cables (1) being pulled into the cable duct (3) by at least one pulling line (6) and fixed after being pulled in by means of the pulling line (6), characterised in that, before being pulled into the cable duct (3), the cable (1) is deformed in the region between two successive cable holders (5) in such a way that, when the pulling line (6) is taut, the cable (1) sags in a curve between the cable holders (5).

2. A process according to claim 1 characterised in that the cable (1) is deformed with a press (14), the pressing punch member of which presses the cable (1) onto a pressing support member (15) with a curved surface, and deforms the cable.

3. Apparatus for laying and fastening heavy electrical cables (1) in a cable duct (3), for carrying out the process according to claim 1, comprising a plurality of cable holders (5) which are force-lockingly fastened to the cable (1) and which are connected to at least one pulling line (6) for pulling in and fastening the cable, characterised in that the cable holders (5) have a means (30, 36, 37) for fastening the cable (1), said means being connected to at least two radially disposed arms (33, 34, 35) which hold it substantially in the centre of the cable duct (3), and that the pulling line or lines (6) is or are secured to the arms.

4. Apparatus according to claim 3 characterised in that the cable holder (5) has arms (33, 34, 35) arranged substantially at an angle of 120°.

5. Apparatus according to claim 3 or claim 4 characterised in that the arms are surrounded by a casing (31, 32), the external configuration of which approximately corresponds to the cross-section of the cable duct (3).

6. Apparatus according to claim 5 characterised in that the casing (31, 32) is in two parts and that the junction between the two parts of the casing is at the radial arms (33, 34).

7. Apparatus according to one of claims 3 to 6 characterised in that the arms (33, 34, 35) are provided with rolling members (45) at their radially outward ends.

8. Apparatus according to one of claims 3 to 7 characterised in that there are two pulling lines (6) which are fastened to the arms (33, 34) at a spacing from each other and at the same spacing from the longitudinal centre line of the cable (1).

9. Apparatus according to claim 8 characterised in that a respective line clamp (40) is provided between each two successive cable holders (5), for holding the pulling lines (6) together.

10. Apparatus according to one of claims 3 to 9 characterised in that the cable duct (3) and the cable holders (5) are of a polygonal and in particular a circular cross-section.

11. Apparatus according to claim 10 characterised in that the cable duct (3) has at least one guide bar portion extending parallel to the longitudinal axis and the cable holder (5) has at least one recess extending complementarily to the guide bar portion.

12. Apparatus according to claim 10 characterised in that the cable duct (3) has at least one guide groove extending parallel to the longitudinal axis and the cable holder (5) has at least one projection extending complementarily to the guide groove.

**Revendications**

1. Procédé pour poser et fixer un lourd câble électrique (1) dans un canal de réception (3), procédé selon lequel on fixe, à des intervalles réguliers sur le câble (1), des supports de câble (5) qui, conjointement avec le câble (1) sont introduits dans le canal (3) avec au moins un filin de tension (6) et qui, après l'introduction, sont fixés à l'aide du filin de tension (6), caractérisé en ce qu'on déforme le câble (1) avant de l'introduire dans le canal (3), dans la région comprise entre deux supports successifs (5), de telle manière que le câble (1) présente, entre les supports (5), une flèche incurvée lorsque le filin de tension (6) est tendu.

2. Procédé selon la revendication 1, caractérisé en ce qu'on déforme le câble (1) au moyen d'une presse (14) dont le poinçon comprime et déforme le câble (1) contre un sommier (15) présentant une surface incurvée.

3. Dispositif pour poser et fixer de lourds câbles électriques (1) dans un canal de réception (3) pour la mise en œuvre du procédé selon la revendication 1, ce dispositif comprenant un certain nombre de supports de câble (5) qui sont fixés mécaniquement au câble (1) et qui sont reliés à au moins un filin de tension (6) pour l'introduction et la fixation du câble (1), et se caractérisant en ce que les supports de câble (5) présentent un dispositif (30, 36, 37) pour fixer le câble (1), qui est relié à au moins deux barrettes radiales (33, 34, 35) qui les maintiennent approximativement au centre du canal de réception (3), et en ce que le ou les filins de tension (6) est ou sont fixés aux barrettes.

4. Dispositif selon la revendication 3, caractérisé en ce que le support de câble (5) présente des barrettes (33, 34, 35) disposées suivant un angle d'environ 120°.

5. Dispositif selon la revendication 3 ou 4, caractérisé en ce que les barrettes sont entourées d'une enveloppe (31, 32) dont la configuration extérieure correspond approximativement à la section du canal de réception (3).

6. Dispositif selon la revendication 5, caractérisé en ce que l'enveloppe (31, 32) est en deux parties et en ce que la zone de jonction des deux parties de l'enveloppe est située au niveau des barrettes radiales (33, 34).

7. Dispositif selon l'une des revendications 3 à 6, caractérisé en ce que les barrettes (33, 34, 35) sont pourvues, à leurs extrémités radialement extérieures d'éléments de roulement (45).

8. Dispositif selon l'une des revendications 3 à 7, caractérisé en ce que deux filins de tension (6) sont prévus, qui sont espacés l'un de l'autre et sont fixés aux barrettes (33, 34) à égale distance de l'axe central longitudinal du câble (1).

9. Dispositif selon la revendication 8, caractérisé en ce que, entre deux supports de câble successifs (5), est prévue respectivement une pince (40) pour tenir les filins de tension (6) assemblés.

10. Dispositif selon l'une des revendications 3 à 9, caractérisé en ce que le canal de réception (3) et les supports de câble (5) présentent une section polygonale, en particulier, une section circulaire.

11. Dispositif selon la revendication 10, caractérisé en ce que le canal de réception (3) présente au moins une barrette de guidage s'étendant parallèlement à l'axe longitudinal et en ce que le support de câble (5) présente au moins un renforcement complémentaire à la barrette de guidage.

12. Dispositif selon la revendication 10, caractérisé en ce que le canal de réception (3) présente au moins une rainure de guidage s'étendant parallèlement à l'axe longitudinal et en ce que le support de câble (5) présente au moins une saillie complémentaire à la rainure de guidage.

Fig. 1

Fig. 2

Fig. 3

## Fig.4

## Fig.5

Schnitt X-X

0 017 616